**Europäisches Patentamt**

**European Patent Office**

**Office européen des brevets**

(19)

(11) **EP 1 564 616 A2**

(12) # EUROPEAN PATENT APPLICATION

(43) Date of publication:
**17.08.2005 Bulletin 2005/33**

(51) Int Cl.⁷: $G05D\ 23/19$, $F24D\ 19/10$

(21) Application number: **05001337.4**

(22) Date of filing: **24.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **23.01.2004 NL 1025309**

(71) Applicant: **N.V. Nederlandsche Apparatenfabriek NEDAP**
**7141 DC Groenlo (NL)**

(72) Inventors:
- **Leerkotte, Bernardus Johannes Maria**
  **7572 BW Oldenzaal (NL)**
- **Nieuwenhuis, Marcel Geradus Maria**
  **7546 JM Enschede (NL)**

(74) Representative: **Winckels, J.H.F., Mr. Ir. et al**
**Vereenigde,**
**Johan de Wittlaan 7**
**2517 JR Den Haag (NL)**

(54) **System for independently regulating temperatures in different spaces and temperatures of one or more hot-water suplies**

(57)    A system for independently regulating the temperatures in different spaces, wherein partly by measuring the supply and discharge temperatures of each heating body (5,8,11,14,17), data are obtained which are used to regulate all radiator valves (4,7,10,13,16) in the installation, such that there is a continuous balanced distribution of the thermal power generated in the heat source (1), wherein the thermal power of the heat source (1) and also the pump (2) power can be controlled, so that the desired temperature in each space can be achieved and maintained in a comfortable manner. The system further provides a temperature regulation of hot water boilers (66) which draw the required energy from the central heating system.

**EP 1 564 616 A2**

**Description**

The invention concerns an electronic system with which the temperatures of various spaces (for instance within a dwelling) can be set independently of each other and wherein use is made of one (hybrid) heat source. In addition, the system can regulate the temperatures of one or more hot-water boilers, with the central heating installation providing the required heat.

In current electronic systems, for each space to be heated, one temperature sensor is used. Further, each space has its own setting element with which the desired space temperature can be indicated. Each radiator or other heating body such as a floor, wall or ceiling heating element or hot water boiler has a regulating valve, settable from the system, with which the delivered heat can be influenced.

In the above systems according to the present state of the art, the following drawbacks are present:

1. If the desired space temperature is increased, the electronic system opens the regulating valve so far that an uncontrolled amount of hot water per unit time proceeds to flow through the radiator, so that other radiators in other spaces may sustain a deficit of heat, with the result that the desired temperature set there cannot be maintained or achieved.

2. Upon changing the desired temperature in a particular space, as a result of the change of the flow of hot water, the temperature of other radiators will change, as a result of which the delivered power changes, which in turn has as a consequence that other space temperatures start to change. The temperature change which has thus set in will be sensed by a temperature sensor in a particular space only after some time and consequently the system will proceed to adjust the position of the radiator valve. The result is fluctuation of the space temperature.

3. The (hybrid) heat source (a heating boiler, fuel cell, heat pump, district heating and the like, or a combination thereof) is not informed about the necessary thermal power that is needed to maintain or adjust the temperatures in the various spaces, with the result that the heat source in most cases supplies too much or too little power, thus making optimum regulation and comfort impossible.

4. The efficiency of the heat source (in particular with gas-fired high-efficiency heating boilers) is adversely affected by the regulating valve of a heating body being opened more than is necessary during heating-up of a space. The cause of this efficiency decrease is that the supply water cannot cool sufficiently during the passage through the heating body, so that the return temperature of the water is too high, as a result of which less water vapor in the flue gases can condense in the heat exchanger.

5. The power of the central circulation pump cannot be regulated from the system, so that in general the water throughflow is too high or even much too high. This has as a consequence that unnecessarily much electric energy is lost in the pump and the regulating valves on the radiators need to throttle the water flow unduly, so that the regulation of the radiators must be done within a small part of the regulating range of the regulating valve. As a result, the regulation of the radiator valve is not nearly optimal, so that the valve threatens to reciprocate between a totally closed condition and an unduly far, or even completely, open condition.

6. Radiator valves typically have the possibility of initializing the radiator as a part of the total installation, such as to yield a balanced distribution of hot water through the radiators with opened and initialized valves. Such water-side initialization is possible by mechanically limiting the maximum stroke of the radiator valve by tuning. Also, one or more radiators may be provided with a settable foot valve with which the minimum flow resistance can be set, so that the complete stroke of the radiator valve can be utilized. This process of water-side tuning, however, is highly labor intensive and in most case several visits of the installer are needed to get a heating installation properly tuned to some extent. After such water-side tuning, there is a static maximum position for the radiator valves of each radiator. As the central circulation pump, as mentioned, typically runs on much too high a power, regulating the heat supply to the radiator by hand or through a thermostatic radiator valve has an adverse influence on the equilibrium in the installation as set on the water side.

The invention provides a solution for at least one and in particular a plurality of the above-mentioned drawbacks by measuring the supply and discharge temperatures of each heating body and using the obtained data to regulate all radiator valves in the installation such that there is a continuous balanced distribution of the thermal power generated in the heat source, while in the most extensive version of this invention, the thermal power of the heat source and also the pump power can be controlled, so that the desired temperature in each space can be achieved and maintained in a comfortable manner.

Referring to the drawing, the principle of the system will be elucidated and invented applications explained.

Fig. 1 shows the example of a central heating installation in a building with different spaces.
Fig. 2 shows the part of a heating installation and the electronic system according to this invention within one space.
Fig. 3 shows, of the same central heating installation as in Fig. 1, the layout of the electronic system of this invention.

2

Fig. 4 shows a hot water boiler which is connected to the heating installation for the purpose of heating up consumptive water.

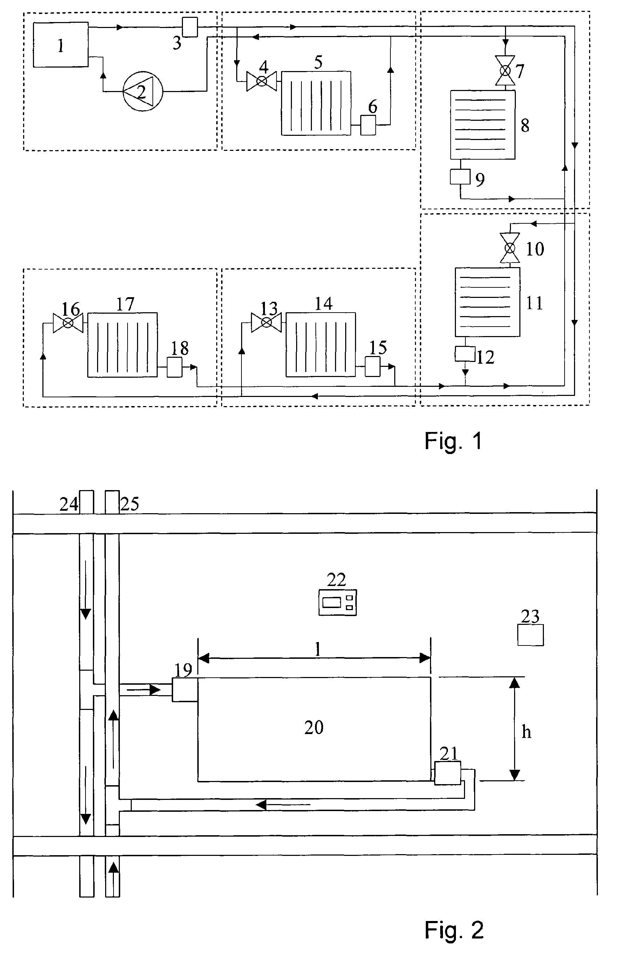

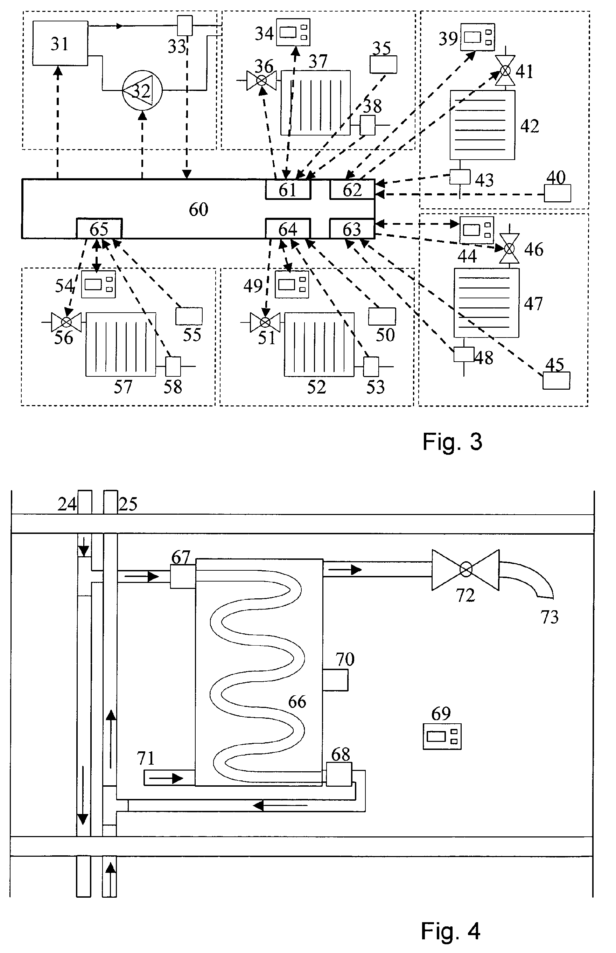

In Fig. 1, there is symbolically represented a central heating installation in which water is heated by means of the (hybrid) heat source (1) and in which the water is distributed via a pipe system over one or more heating bodies (5, 8, 11, 14 and 17), such as radiators, wall, floor or ceiling heating elements, which are installed in different spaces, each of such heating bodies being provided with an electronically operable regulating valve (4, 7, 10, 13 and 16) and a temperature sensor (6, 9, 12, 15 and 18) with which the return temperatures ($T_R$) can be measured. The regulating valves mentioned can be mounted on a central distributor block or near the heating body. The supply temperature (Ts) is measured with the temperature sensor (3). If in an installation it has been arranged for all pipes to be well-insulated, this measured temperature will deviate only little from the supply temperatures (Ts) of the heating bodies (5, 8, 11, 14 and 17), as far as these are controlled by the control (60) (in Fig. 3) to heat the respective space. In installations where the desired insulation is poor and the thermal losses are high, it may be elected to provide each heating body with a temperature sensor (19 in Fig. 2) on the supply.

The circulation pump (2) provides for the transport of the hot water through the installation. The circulation pump (2) can also be an additional circulation pump which is located outside the heat source (1) being used, in which case the standard pump within that heat source is stopped. The external circulation pump (2) experiences only few flow losses resulting from the stopped standard circulation pump in the heat source (1).

Fig. 1 makes it clear that owing to the flow resistance of the pipes and heating bodies, and given equally opened regulating valves (4, 7, 10, 13 and 16) and equal heating bodies (5, 8, 11, 14 and 17), the heating body (17) situated at the far end in the central heating system relative to the heat source (1) will have less water throughflow than the heating bodies (5, 8, 11 and 14) installed closer to the heat source.

By means of the electronically operable regulating valves (4, 7, 10, 13 and 16), it can be arranged, if desired, for the throughflow of all heating bodies to be the same.

To be able to regulate the temperatures in different spaces independently, it is necessary to indicate per space a desired temperature on a setting element (22) (see Fig. 2) (34, 39, 44, 49 and 54) (see Fig. 3); to measure the temperatures in the respective spaces ($T_A$) with a temperature sensor (23) (see Fig. 2) (35, 40, 45, 50 and 55) (see Fig. 3); and to set the throughflow of hot water through the heating body (20) with the regulating valve (19), through measurement of the return temperature with the return sensor (21) and through measurement of the supply temperature with the supply sensor (3), such that the throughflow is modified so much that the delivered thermal power becomes so large that the space is heated up to the desired temperature without the necessary thermal power that is needed in the other spaces being modified. This last means that the position of regulating valves in the other spaces is adjusted by the electronic system according to this invention, such that the delivered power in these spaces is maintained, at the same pump speed, while the total required power is communicated as heat demand to the heat source (1) by the system according to this invention. In heating systems which themselves have a control which independently keeps the supply temperature constant, such heat demand based on desired power is not necessary. In the extended version of this invention, the speed of the pump (2) is raised so far that the throughflow of the water in the other spaces is maintained and the generated thermal power of the heat source (1) is adjusted so much that the supply temperature is regulated to the same value, so that the other radiator valves can remain in the same position. Through the above method of regulation, a considerable extension of the life of the batteries for adjusting the valves is achieved. As soon as the space has attained the desired temperature, the regulating valve will rotate to a position in which the heating body delivers as much thermal power as disappears from the respective space through the thermal losses. Since the delivered thermal power can be calculated using the above measurements, which will be elucidated hereinafter, the sum of all delivered thermal powers can be determined, which is to be provided by the heat source (1).

The regulating system according to this invention will set the heat demand on the heat source (1) such that a situation arises where the regulating valves (4, 7, 10, 13 and 16) do not need to be driven, or hardly so, while it is ensured that the pump power is limited so much that the regulating valve of the heating body that is most difficult to reach because of high flow resistances in the central heating system is opened substantially completely. What is thus achieved is that the electricity consumption of the circulation pump (2) can be strongly reduced and that the level of undesired disturbing noises can be kept as low as possible.

Fig. 3 shows the position of the system (60) according to this invention within the central heating system to be controlled that is also illustrated in Fig. 1. The arrows indicate which sensors (33, 35, 38, 40, 43, 45, 48,50, 53, 55 and 58), setting elements (34, 39, 44, 49 and 54) and actors (such as regulating valves (36, 41, 46, 51 and 56), pump (32) and heat source (1)) communicate with the system. For each space to be regulated, a block (61, 62, 63, 64 and 65) is represented which takes care of the communication for the system (60). How communication proceeds in effect, for instance via powerline, ethernet, wirelessly, and so forth, is not relevant to the operation of the concept of this invention.

Using the data that every radiator manufacturer must provide according to the standard EN 442, it is possible to determine the delivered thermal power of the radiator (20) in Fig. 2 using the results of the above-mentioned temperature measurements ($T_A$, $T_S$ and $T_R$).

To be able to describe the properties of a particular radiator, the standard EN 442 starts from exact test conditions, whereby the average temperature difference ($\Delta\theta$) of the radiator with respect to the ambient temperature ($T_A$), which has been set at 20°C, is brought to 50K by providing the radiator to be tested at the inlet (19) with hot water having a supply temperature ($T_S$) of 75°C and setting the flow rate of the flowing water such that the return temperature ($T_R$) (21) stabilizes at 65°C.

Under these conditions, the delivered thermal power is determine d, which value is noted down as power $P_{50}$ (Watt) of the measured radiator.

The average temperature difference with respect to the environment ($\Delta\theta$) is determined by formula 1:

$$\Delta\theta = (T_S - T_R)/\{\ln\,[(T_S - T_A)/(T_R - T_A)]\}$$

[Kelvin].

At other temperatures than those during the above-mentioned test conditions, the delivered power can be determined with formula 2:

$$P = P_{50}\,(\Delta\theta\,/\,50)^N\ [\text{Watt}],$$

wherein the exponent N is a property of the radiator.

Under the above-mentioned test conditions, for most radiators the following values for the exponent N are found: $1.20 < N < 1.34$.

Formulae 1 and 2 lead to formula 3, which describes the delivered thermal power under all possible conditions: (Formula 3)

$$P = P_{50}\{(T_S - T_R)/\{50\ \ln[(T_S - T_A)/(T_R - T_A)]\}\}^N$$

[Watt].

The value $P_{50}$ which has been determined under laboratory conditions can often be regarded as reasonably accurate in practical circumstances. However, when the radiator is for instance suspended behind a curtain or is built-in, the delivered power (P) will prove to be lower than the outcome given by formula 3.

Of each heating body, the regulation according to this invention can determine the properties concerning the delivered power P under the prevailing conditions and apply these for the purpose of an optimum regulation.

$P_{50}$ and the exponent N of a heating body in a particular space can be determined autonomously by the regulating system. For this purpose, minimally two measurements are performed at the times when all spaces and the heating bodies present therein have already been at the desired temperature for some time.

The first measurement must be performed at other temperatures than the second measurement. Since formula 3 is universal for all circumstances, the interval between the two measurements is not relevant. The same holds for the speed of the circulation pump (32) because the supply temperature Ts and the return temperatures of the heating bodies ($T_R$) are the result of a stabilized situation of the temperature within the central heating system. The first measurement can for instance be performed at night and the second after the day temperatures within all spaces have stabilized.

At the time when a first measurement of a heating body starts, the measured temperatures ($T_{A1}$, $T_{S1}$ and $T_{R1}$) are stored in a memory and the regulating valve is automatically closed completely. The regulating system then determines by how much the power of the heat source (31) (Fig. 3) must be reduced to maintain all temperatures in the other spaces. The decrease of the power is stored as the value Pi.

In the second measurement, in the same manner, the results ($T_{A2}$, $T_{S2}$, $T_{R2}$ and $P_2$) are stored. When the power decrease of $P_1$ and/or $P_2$ is so large that the heat source (31), such as the burner of a high-efficiency boiler, goes outside the minimal regulating range, the heat source (31) must be switched off periodically to provide that average power ($P_1$ and/or $P_2$) to maintain the temperatures in all other spaces. The return temperature $T_R$ of one or more heating bodies in the spaces where the temperature is to be maintained is used to adjust the power of the heat source (31) back so much that the measured return temperature ($T_R$) is maintained. This is a better and faster way than regulating the heat source (31) back via measurement of the space temperature ($T_A$).

Other options for performing the two measurements are:

1. Regulating solely the heating body in one space and closing all other regulating valves in the other spaces. The heat source (31) then supplies power only to the heating body to be measured. This measuring method has the disadvantage that the losses in the pipe system can cause a considerable measuring error and that the circulation pump (32) may have too much power for one heating body.

2. Raise the power of one or more heating bodies in other spaces, whose properties have already been determined, such that the power of the heat source (31), after closing of the regulating valve of the heating body to be tested, remains constant.

Presently, with the measuring results found ($T_{A1}$, $T_{S1}$, $T_{R1}$ and $P_1$ and $T_{A2}$, $T_{S2}$, $T_{R2}$ and $P_2$), the values $P_{50}$ and N can be calculated via formula 3. For this purpose, formula 3 is written in a different form:

$$\text{Formula 4: } P_{50} = P_1/\{(T_{S1} - T_{R1})/\{50 \ln[(T_{S1} - T_{A1})/(T_{R1} - T_{A1})]\}\}^N$$

and

$$\text{Formula 5: } P_{50} = P_2/\{(T_{S2} - T_{R2})/\{50 \ln[(T_{S2} - T_{A2})/(T_{R2} - T_{A2})]\}\}^N$$

[Watt] .
Derived from these is formula 6:

$$N = \ln(P_1/P_2)/$$

$$\ln\{[(T_{S1} - T_{R1})/(T_{S2} - T_{R2})]/$$

$$\{\ln[(T_{S1} - T_{A1})/(T_{R1} - T_{A1})]/\ln[(T_{S2} - T_{A2})/(T_{R2} - T_{A2})]\}\}.$$

If the calculated exponent N is substituted in formula 4 or formula 5, then $P_{50}$ is also determined.

Thus, the properties $P_{50}$ and N of the respective heating body are known and for all temperatures the delivered thermal power can be determined using formula 3. When, for instance, in a particular space a higher desired temperature is selected on the setting element, the regulating system according to this invention can already calculate via formula 3 what extra power is to be supplied to the central heating system and what the associated return temperature of the heating body present in that space will eventually be. This can for instance be performed as follows: The new desired space temperature is achieved by raising the average temperature difference with respect to the environment ($\Delta\theta$) according to formula 1. This can be done by raising Ta and/or Tr. The system according to this invention utilizes the calculated power P (formula 3) which is delivered by a heating body at a stabilized known space temperature Ta. Using a stored curve (P = f ($\Delta\theta$)), the new required power that is necessary for maintaining the new space temperature can be approximated. Accordingly, Ta remaining equal, Tr is calculated using formula 3 for obtaining the desired new power. The calculated new required power for a heating body can be set by setting the associated regulating valve in the position calculated therefor, using formula 7 (which is elucidated hereinafter) with which per heating body a curve of the flow rate as a function of the position of the regulating valve is used which during the use of the system according to this invention has been determined by each time recording the properties of the heating body at the various positions used of each regulating valve.

If this method is used, then the regulating valve will already be set near the eventual position, so that the space mentioned will heat up gradually until the calculated equilibrium situation will occur. In that case, none of the other regulating valves (36, 41, 46, 51 and 56) in the other spaces need to be set differently. If a faster heating-up is desired and the required power can be supplied by the heat source (31), the regulating valve can be opened further and simultaneously the extra power can be supplied, while the supply temperature (Ts) will thus remain at the same value. Consequently, the regulating system can keep the return temperatures ($T_R$) of all other heating bodies constant by raising the pump power, so that it is not necessary to adjust the regulating valves in the other spaces.

Since the energy that is needed to heat up the space mentioned until the time at which a new stabilized temperature has been achieved is calculated (the integral of the power over time), the regulating system can determine the joint heat capacity [J/K] of the heating body (including the water in the respective heating body) and of the space in which the heating body is utilized. The heat capacity of the space is determined by reducing the determined joint heat capacity by the heat capacity of the heating body that has been determined by dividing the integral of the power over time by the rise of the average temperature of the heating body.

The derived heat capacities can be used to calculate heat-up times, so that the regulating system according to this invention will be able, via a user program, to achieve the desired temperatures everywhere at desired times very accurately. As mentioned earlier, the regulating behavior of the whole system can be improved by including at each heating body a temperature sensor for the supply temperature, so that the power delivered by the heating body can be determined still better and also the flow rate and hence the delay time between the inlet and outlet of the heating body can be derived. If the water content (I) [kg], the calculated delivered power (P), and the temperatures $T_A$, $T_S$ and $T_R$ of the heating body are known, the transit time from inlet to outlet of the heating body can be calculated.

$$\text{Formula 7: The flow rate } Q_{rad} = P / [\, 4180\, (T_S - T_R)\,]$$

in [kg/s] ;
wherein 4180 is the specific heat of water in [J/kg.K].

$$\text{Formula 8: The delay time } t_d = I / Q_{rad}$$

in [s].
From formulae 3, 7 and 8, the relation for the delay time of the water through the heating body can be derived:

$$\text{Formula 9: } t_d = 4180(I/P)\{\{[50\,\ln[(T_S - T_A)/$$

$$(T_R - T_A)]]^N\}/(T_S - T_R)^{N-1}\}$$

[s].
The delay times or transit times in the central heating system can be determined by running the circulation pump (32) at a much lower speed for a short time or actually stopping it briefly, so that the water at that time passing the heat exchanger of the heat source (31) or residing in the heat exchanger acquires a reasonable higher and still acceptable temperature.

When after the above-mentioned short period the circulation pump (32) is set to the original speed again, an amount of water of a higher temperature moves through the central heating system. Although the original temperature rise will rapidly decrease during the passage, the return temperature sensors (38, 43, 48, 53 and 58) will detect a short temperature increase upon the passage. If the normal temperature of the supply water has to be high, the measurement can for instance be done when the central heating system has to switch from day temperatures to night temperatures.

The calculated delay times can be used in the regulating algorithms for the purpose of, instead of being responsive to temperature changes so that substantial temperature fluctuations can arise, taking action already on the basis of the known system behavior.

Further, the system according to this invention provides the possibility, in cases where the power of the heat source is (temporarily) inadequate, to lower the temperatures of all spaces somewhat in order for power that *can* be supplied by the heat source to be evenly distributed over the different spaces. This is possible in that the system according to this invention knows the properties of the central heating system through performing measurements on which the regulation is based.

Further, besides being used to regulate space temperatures, the system can be used for decentrally (pre) heating one or more hot water boilers (66) for the purpose of tapping hot consumptive water, while for achieving or maintaining the desired temperature that has been set on the setting element (69), use is made of a sensor (70) which measures the average temperature of the consumptive water which is taken by the system as the space temperature $T_A$.

As in the case of the above-mentioned heating bodies, the power delivered to the hot water boiler is calculated using formula 3, with the temperature $T_R$ being measured by means of the return sensor (68). Through the automatic regulation of the regulating valve (67), the consumptive water is heated up. During the tapping of hot water via the tapping point (73), cold water will flow via the inlet pipe (71) into the hot water boiler, so that the average temperature $T_A$ of the water in the hot water boiler (66) falls.

It may be elected to draw the heat for the hot water boiler completely from the central heating system or that, especially during the warmer days of the year, the required energy be supplied substantially via an electrical heating element, this to prevent undue heat losses.

**Claims**

1. An electronic system for the control of a central heating system based on a (hybrid) heat source with which water is heated and wherein the water is distributed via a pipe system over one or more heating bodies such as radiators, wall, floor or ceiling heating elements which are installed in different spaces, wherein each of said heating bodies is provided with an electronically operable regulating valve, with which the water supply to the heating body can be varied and the desired temperature in a particular space can be regulated through a temperature sensor and a setting element, **characterized in that**, in use, by measuring the supply temperature and the return temperature of each of said heating bodies, by means of a regulation the thermal power in the water generated by said heat source is distributed over the various heating bodies, such that said return temperature on each of said heating bodies can be regulated by said regulating valve, such that each heating body will deliver so much heat as is necessary to modify or to maintain the temperature in the respective space, and wherein during the heating up of one or more spaces the heat distribution is regulated such that all other space temperatures are maintained.

2. An electronic system according to claim 1, **characterized in that**, in use, for each space the properties of the heating body present there, or the heating bodies present **in that** space, can be determined by the system and can be used for the regulation by, at the times when all spaces and the heating bodies present therein have already been at the desired temperature for some time, completely closing the regulating valve of the heating body whose properties are to be determined or checked and thereupon establishing how far the power of the heat source must be regulated back to maintain the already achieved stable situation in the other spaces, for which at least two measurements are needed and wherein at least one of the measured temperatures, for instance the day temperature and the night temperature, differ from each other sufficiently.

3. An electronic system according to one or more of the preceding claims, **characterized in that**, in use, by measuring the supply temperature, the return temperature and the prevailing space temperature, the delivered thermal power of a heating body can be determined and that by adding up the calculated thermal powers of all heating bodies in the various spaces the total heat demand on the (hybrid) heat source in the central heating system can be optimally tuned.

4. An electronic system according to one or more of the preceding claims, **characterized in that**, in use, by determining the delivered thermal power of a heating body during a temperature increase, the heat capacity of the heating body and the space in which the heating body is installed can be determined, which is utilized in the regulating system to be able to optimize the heat demand on the (hybrid) heat source also during temperature increases in one or more spaces.

5. An electronic system according to one or more of the preceding claims, **characterized in that**, in use, the circulation pump is regulated back in speed, such that the regulating valve of the heating body that has the highest flow resistance **in that** part of the installation is opened substantially completely, so that the other regulating valves are regulated such that the desired throughflow through all heating bodies is set and thereby the electricity consumption of the circulation pump is minimized and the level of disturbing noises in the installation is kept as low as possible.

6. An electronic system according to one or more of the preceding claims, **characterized in that**, in use, in the case where the total available thermal power is (temporarily) inadequate, all spaces undergo a substantially equal small temperature decrease, so that in most cases comfort can be maintained.

7. An electronic system according to one or more of the preceding claims, **characterized in that**, in use, the regulating behavior of the whole system is improved by including at each heating body a temperature sensor for the supply temperature, so that the power delivered by a heating body can be determined still better and also the flow rate and hence the delay time between the inlet and outlet of the heating body can be derived, which value can be used in the regulating algorithm to be applied.

8. An electronic system according to one or more of the preceding claims, **characterized in that**, in use, the system, besides being used for regulating space temperatures, can also be used for decentrally (pre)heating one or more hot water boilers for the purpose of tapping hot consumptive water, wherein for achieving or for maintaining the desired temperature use is made of a sensor which measures the average temperature of the consumptive water which is taken by the system as the space temperature.

9. A method for controlling a central heating system, wherein the central heating system is provided with at least one (possibly hybrid) heat source and a plurality of heating bodies such as radiators, wall, floor or ceiling heating elements which via a pipe system are in fluid communication with the heat source, wherein a number of the heating bodies are each provided with an operable regulating valve with which the magnitude of a fluid flow through the respective heating body can be regulated, wherein the heating bodies are arranged spread over a number of different spaces, and wherein the central heating system is further provided with at least one temperature sensor for measuring the temperature in at least one of the spaces, a setting unit for entering a desired temperature in at least one of the spaces and a control unit which is connected with the at least one temperature sensor, the setting unit and the heat source for regulating the thermal power delivered by the heat source, depending on the temperature measured with the at least one temperature sensor and the desired temperature entered with the setting unit, **characterized in that** the regulating valves are designed to be controllable by the control unit, the spaces being each provided with a temperature sensor which is connected with the control unit for measuring the temperature in the respective space, each space being further provided with a setting unit for entering a desired temperature in the respective space, the central heating system being further provided with measuring means for measuring at least one supply temperature (Ts) of the fluid to the heating body and for measuring per heating body a return temperature (Tr) of the fluid flowing out of the respective heating body, wherein by means of the control unit, on the basis of the entered temperatures desired for the spaces, the temperatures measured for the spaces, the measured at least one supply temperature and the measured return temperatures, the total power of the heat source that is to be delivered is set and each of the regulating valves is set.

10. A method according to claim 9, **characterized in that** with the control unit, on the basis of a change in a desired temperature in one of the spaces, it is determined what is the new power required for the respective space to obtain the desired temperature in the space and subsequently the heat source is set accordingly.

11. A method according to claim 10, **characterized in that** with the control unit the regulating valves of the heating bodies that are arranged in the space where the desired temperature has changed are set anew.

12. A method according to claim 10 or 11, **characterized in that** with the control unit the temperature of the fluid that is delivered by the heat source and/or the magnitude of the flow rate of the fluid that is delivered by the heat source is set such that the regulating valves of the heating bodies that are situated in spaces in which the desired temperature has not changed do not need to be set differently to maintain the temperature in these spaces.

13. A method according to any one of the preceding claims 9-12, **characterized in that** the measuring means for measuring the at least one supply temperature (Ts) of the fluid to the heating bodies are arranged for measuring the supply temperature (Ts) per heating body.

14. A method according to any one of the preceding claims 9-13, **characterized in that** by measuring the return temperature of each of said heating bodies the thermal power in the water as generated by said heat source is distributed over the various heating bodies, such that said return temperature on each of said heating bodies can be regulated by said regulating valve, such that each heating body will deliver so much heat as is necessary to modify or to maintain the temperature in the respective space and wherein during the heating up of one or more spaces the heat distribution is regulated such that all other space temperatures are maintained.

15. A method according to claim 14, **characterized in that** for each space the properties of the heating body present there or the heating bodies present **in that** space are determined and are used for the regulation by the following procedure: at the times when all spaces and the heating bodies present therein have already been at the desired temperature for some time, the regulating valve of the heating body whose properties are to be determined or checked is completely closed and thereupon it is established how far the power of the heat source must be regulated back to maintain the already achieved stable situation in the other spaces, wherein said procedure is performed at least twice at different temperatures, for instance at a day temperature of that space and a night temperature of that space.

16. A method according to one or more of the preceding claims 9-15, **characterized in that** by measuring the supply temperature, the return temperature and the prevailing space temperature, the delivered thermal power of a heating body is determined and that by adding up the calculated thermal powers of all heating bodies in the various spaces the total heat demand on the (hybrid) heat source in the central heating system is optimally tuned.

17. A method according to one or more of the preceding claims 9-16, **characterized in that** by determining the delivered thermal power of a heating body during a temperature increase, the heat capacity of the heating body and the space in which the heating body is installed is determined, which is utilized in the regulating system to optimize the heat demand on the (hybrid) heat source also during temperature increases in one or more spaces.

18. A method according to one or more of the preceding claims 9-17, **characterized in that** a circulation pump of the heat source is regulated back in speed, such that the regulating valve of the heating body that has the highest flow resistance **in that** part of the installation is opened substantially completely, while the other regulating valves are regulated such that the desired throughflow through all heating bodies is set and thereby the electricity consumption of the circulation pump is minimized and the level of disturbing noises in the installation is kept as low as possible.

19. A method according to one or more of the preceding claims 9-18, **characterized in that** in the case where the total available thermal power is (temporarily) inadequate, all spaces undergo a substantially equal small temperature decrease, so that in most cases comfort can be maintained.

20. A method according to one or more of the preceding claims 9-19, **characterized in that** the regulating behavior of the whole system is improved by including at each heating body a temperature sensor for the supply temperature, so that the power delivered by the heating body can be determined and also the flow rate and hence the delay time between the inlet and outlet of the heating body can be derived, which value is used in the algorithm to be applied.

21. A method according to one or more of the preceding claims 9-20, **characterized in that** the system, besides being arranged for regulating space temperatures, is also arranged for decentrally (pre)heating one or more hot water boilers for the purpose of tapping hot consumptive water, wherein for achieving or maintaining the desired temperature use is made of a sensor which measures the average temperature of the consumptive water which is taken by the system as the space temperature.

22. A central heating system provided with at least one (possibly hybrid) heat source and a plurality of heating bodies such as radiators, wall, floor or ceiling heating elements which via a pipe system are in fluid communication with the heat source, wherein a number of the heating bodies are each provided with an operable regulating valve with which the magnitude of a fluid flow through the respective heating body can be regulated, wherein the heating bodies are arranged spread over a number of different spaces, and wherein the central heating system is further provided with at least one temperature sensor for measuring the temperature in at least one of the spaces, a setting unit for entering a desired temperature in at least one of the spaces and a control unit which is connected with the at least one temperature sensor, the setting unit and the heat source for regulating the thermal power delivered by the heat source, depending on the temperature measured with the at least one temperature sensor and the desired temperature entered with the setting unit, **characterized in that** the regulating valves are designed to be controllable by the control unit, the spaces being each provided with a temperature sensor which is connected with the control unit for measuring the temperature in the respective space, wherein each space is further provided with a setting unit for entering a desired temperature in the respective space, wherein the central heating system is further provided with measuring means for measuring at least one supply temperature (Ts) of the fluid to the heating body and for measuring per heating body a return temperature (Tr) of the fluid flowing out of the respective heating body, wherein the control unit, on the basis of the entered temperatures desired for the spaces, the temperatures measured for the spaces, the measured at least one supply temperature and the measured return temperatures, sets according to a predetermined algorithm the total power of the heat source that is to be delivered, and also sets each of the regulating valves.

23. A central heating system according to claim 22, **characterized in that**, in use, the control unit determines on the basis of a change in a desired temperature in one of the spaces and according to the predetermined algorithm what is the new power required for the respective space to obtain the desired temperature in the space and subsequently sets the heat source accordingly.

24. A central heating system according to claim 23, **characterized in that**, in use, the control unit, according to the predetermined algorithm, sets anew the regulating valves of the heating bodies that are arranged in the space where the desired temperature has changed.

25. A central heating system according to claim 23 or 24, **characterized in that**, in use, the control unit sets according to the predetermined algorithm the temperature of the fluid that is delivered by the heat source and/or the magnitude of the flow rate of the fluid that is delivered by the heat source, such that the regulating valves of the heating bodies that are situated in spaces in which the desired temperature has not changed do not need to be set differently.

26. A central heating system according to any one of the preceding claims 22-25, **characterized in that** the measuring means for measuring the at least one supply temperature (Ts) of the fluid to the heating bodies are arranged for measuring the supply temperature (Ts) per heating body.

27. A central heating system according to any one of the preceding claims 22-26, **characterized in that**, in use, by measuring the return temperature of each of said heating bodies, according to the predetermined algorithm the thermal power in the water as generated by said heat source is distributed over the various heating bodies, such that said return temperature on each of said heating bodies can be regulated by said regulating valve, such that each heating body will deliver so much heat as is necessary to modify or to maintain the temperature in the respective space and wherein during the heating up of one or more spaces the heat distribution is regulated such that all other space temperatures are maintained.

28. A central heating system according to claim 27, **characterized in that**, in use according to the algorithm, for each space the properties of the heating body present there or the heating bodies present **in that** space are determined and are used for the regulation by the following procedure: at the times when all spaces and the heating bodies present therein have already been at the desired temperature for some time, the regulating valve of the heating body whose properties are to be determined or checked is completely closed and thereupon it is established how far the power of the heat source must be regulated back to maintain the already achieved stable situation in the other spaces, wherein said procedure is performed at least twice at different temperatures, for instance at a day temperature of that space and a night temperature of that space.

29. A central heating system according to one or more of the preceding claims 22-28, **characterized in that**, in use according to the algorithm, by measuring the supply temperature, the return temperature and the prevailing space temperature, the delivered thermal power of a heating body is determined and that by adding up the calculated thermal powers of all heating bodies in the various spaces the total heat demand on the (hybrid) heat source in the central heating system is optimally tuned.

30. A central heating system according to one or more of the preceding claims 22-29, **characterized in that**, in use according to the algorithm, by determining the delivered thermal power of a heating body during a temperature increase, the heat capacity of the heating body and the space in which the heating body is installed is determined, which is utilized in the regulating system to optimize the heat demand on the (hybrid) heat source also during temperature increases in one or more spaces.

31. A central heating system according to one or more of the preceding claims 22-30, **characterized in that**, in use according to the algorithm, the circulation pump is regulated back in speed, such that the regulating valve of the heating body that has the highest flow resistance **in that** part of the installation is opened substantially completely, so that the other regulating valves are regulated such that the desired throughflow through all heating bodies is set and thereby the electricity consumption of the circulation pump is minimized and the level of disturbing noises in the installation is kept as low as possible.

32. A central heating system according to one or more of the preceding claims 22-31, **characterized in that**, in use according to the algorithm, in the case where the total available thermal power is (temporarily) inadequate, all spaces undergo a substantially equal small temperature decrease, so that in most cases comfort can be maintained.

33. A central heating system according to one or more of the preceding claims 22-32, **characterized in that**, in use according to the algorithm, the regulating behavior of the whole system is improved by including at each heating body a temperature sensor for the supply temperature, so that the power delivered by the heating body can be determined and also the flow rate and hence the delay time between the inlet and outlet of the heating body is derived, which value is used in the algorithm to be applied.

34. A central heating system according to one or more of the preceding claims 22-33, **characterized in that** the system, besides being arranged for regulating space temperatures, is also arranged for decentrally (pre)heating one or more hot water boilers for the purpose of tapping hot consumptive water, wherein, in use, for achieving or maintaining the desired temperature, use is made of a sensor which measures the average temperature of the consumptive water which is taken by the system as the space temperature.

Fig. 1

Fig. 2

Fig. 3

Fig. 4